# EUROPÄISCHE PATENTSCHRIFT

(11) **EP 3 334 140 B1**
(45) Veröffentlichungstag und Bekanntmachung des Hinweises auf die Patenterteilung: **04.03.2026**
(21) Anmeldenummer: 17001871.7
(22) Anmeldetag: 15.11.2017
(51) Int. Cl.: H04M 9/02, H04W 4/00, H04W 12/06, H04W 12/08, H04M 1/727, H04M 1/725, H04W 88/02

(54) **AUTORISIERUNG IM INTERCOM-NETZWERK, MOBILES ENDGERÄT UND VERFAHREN**
AUTHORIZATION IN AN INTERCOM NETWORK, MOBILE DEVICE AND PROCESS
AUTORISATION DANS LE RÉSEAU INTERPHONIQUE, DISPOSITIF MOBILE ET PROCÉDÉ

(30) Priorität: 09.12.2016 DE 102016123966; 03.04.2017 DE 102017107148
(43) Veröffentlichungstag der Anmeldung: 13.06.2018
(73) Patentinhaber: RIEDEL Communications International GmbH, 42109 Wuppertal (DE)
(72) Erfinder: Lee, Jiou-Pahn, 42109 Wuppertal (DE); Riedel, Thomas, 42109 Wuppertal (DE)
(74) Vertreter: Roche, von Westernhagen & Ehresmann

(56) Entgegenhaltungen:
- EP-A1- 2 665 237
- EP-A1- 3 179 758
- EP-A2- 2 492 875
- WO-A2-2014/083436
- CN-A- 105 551 120
- DE-A1- 102014 104 811
- US-A1- 2012 220 224
- US-A1- 2016 066 143

## Beschreibung

Die Erfindung betrifft zunächst ein Intercom-Netzwerk mit den Merkmalen des Oberbegriffes des Anspruches 1.

Derartige Netzwerke werden von der Anmelderin seit Jahrzehnten entwickelt, vertrieben und eingesetzt und sind beispielsweise in den deutschen Patentanmeldungen DE 10 2014 011 963 A1 und DE 10 2014 104 811 A1 der Anmelderin beschrieben. Die Anmelderin gehört zu den weltweit führenden Unternehmen im Bereich der Intercom-Netzwerke.

Das von der Anmelderin unter der Bezeichnung Acrobat entwickelte und seit geraumer Zeit verwendete Intercom-Netzwerk dient der Echtzeit-Audio-Kommunikation zwischen Teilnehmern.

Die Teilnehmer sind beispielsweise stationäre Intercom-Sprechstellen, aber auch mobile Intercom-Endgeräte. Das Intercom-Netzwerk des Standes der Technik umfasst ein oder mehrere stationäre Elemente. Diese werden im Sprachgebrauch auch als Basis oder Antenne bezeichnet. Die Basis stellt eine Art Vermittlungsstelle bereit, und kann zwischen den angeschlossenen Teilnehmern direkte Leitungswege schalten. Als Antenne wird ein weiteres stationäres Element verstanden, das entweder ebenfalls Aufgaben einer Vermittlungsstelle übernimmt, und/oder als Sendeeinheit und/oder Empfangseinheit für DECT-Funksignale oder ganz allgemein beispielsweise für VHF, UHF, DECT-Signale, insbesondere mit Frequenzbändern 2,4 Gigahertz, 5,2 Gigahertz oder 5,8 Gigahertz und/oder zum Anschluss von weiteren stationären Teilnehmern dienen kann.

An die Basis bzw. die Antenne können eine oder mehrere Sprechstellen und/oder ein oder mehrere stationäre Endgeräte, wie beispielsweise kabelgebundene Mikrofone oder kabelgebundene Headsets angeschlossen sein.

Auch umfassen die Intercom-Netzwerke der bekannten Art in der Regel ein oder mehrere mobile Endgeräte. Als mobile Endgeräte im Sinne der Patentanmeldung werden Geräte verstanden, die drahtlos mit einem oder mehreren Teilnehmern des Intercom-Netzwerkes kommunizieren können. Für die Datenübertragung wird insbesondere das DECT-Frequenzband verwendet. Soweit in dieser Patentanmeldung von dem DECT-Frequenzband konkret gesprochen wird, soll der Fachmann dies als beispielhafte Aufführung einer Vielzahl möglicher von der Erfindung umfasster Frequenzbänder, wie beispielweise VHF, UHF, DECT, z. B. in Frequenzbereichen von 2,4 Gigahertz, 5,2 Gigahertz oder 5,8 Gigahertz verstehen. In diesem Frequenzband können Audiosignale drahtlos von dem mobilen Endgerät an das stationäre Element, also z. B. an die Basis, oder an die Antenne übermittelt werden.

Das mobile Endgerät ist entweder von einem sogenannten Beltpack gebildet, oder von einem mobilen Mikrophon. Ein mobiles Mikrophon ist ein Mikrophon-Handgerät im eigentlichen Sinne, welches drahtlos, insbesondere über einen DECT-Funkstandard, kommunizieren kann.

Ein Beltpack ist an einer Bedienperson oder an einem Kleidungsstück einer Bedienperson befestigbares Gerät, welches Anschlüsse für ein Kabel aufweist, mit dem das Beltpack mit dem Mikrophon oder einem Headset verbunden werden kann.

Das mobile Mikrophon kann auch Bestandteil eines Headsets sein.

Sowohl das Mikrophon als auch das Beltpack weisen jeweils einen Audio-Input auf. Bei dem Mikrophon ist als Audio-Input im Sinne der Erfindung der Mikrophon-Teil selbst zu verstehen, über den eine Bedienperson unmittelbar Audio-Informationen einsprechen kann.

Bei einem Beltpack ist als Audio-Input der Anschlussstecker bzw. die Anschlussbuchse bezeichnet, über die Audio-Signale von einem anzuschließenden Mikrophon oder Headset über ein Kabel oder drahtlos (z. B. via Bluetooth) an das Beltpack übermittelt werden können.

Ein Intercom-Netzwerk der gattungsgemäßen Art wird insbesondere für Veranstaltungen und Live-Events eingesetzt. Hier ist beispielsweise ein Gesangswettbewerb, wie der Eurovision Song Contest, oder ein Sportereignis, z. B. eine Berichterstattung über ein Formel-Eins-Rennen, zu nennen. Vor Ort, während des Events, wird das Intercom-Netzwerk verwendet, und stellt absolut ausfallsichere, schaltbare Kommunikationsverbindungen zwischen den Teilnehmern bereit.

Ein Intercom-Netzwerk wird für die Veranstaltung oder das Event im Vorfeld, beispielsweise werkseitig, konfiguriert. Alle erforderlichen Geräte werden zusammengestellt, und eine Einrichtung zur Teilnehmerverwaltung, die sämtliche an das stationäre Element anzuschließenden Teilnehmer administriert, wird so eingerichtet oder konfiguriert, dass sie weiß, welche Teilnehmer während der Veranstaltung an das Intercom-Netzwerk angeschlossen werden dürfen, und welche nicht. Bei Planung der Veranstaltung kann insoweit bereits exakt festgelegt werden, welche Zahl von Teilnehmern mit welchen Funktionalitäten, aber insbesondere auch, welche Geräte an das Intercom-Netzwerk angeschlossen werden dürfen.

Die Einrichtung zur Teilnehmerverwaltung kann im Rahmen des Konfigurationsvorgangs insbesondere so programmiert werden, dass festgelegt und gespeichert wird, welches bestimmte mobile Endgerät während der Veranstaltung an das Intercom-Netzwerk angeschlossen werden darf, bzw. werden soll.

Die einzelnen Geräte des entsprechend vor-konfigurierten Intercom-Netzwerkes werden sodann zu dem Ort der Veranstaltung hin verschickt, und vor Ort aufgebaut.

Die mobilen Endgeräte werden in der Regel Bedienpersonen, z. B. Berichterstattern, Moderatoren oder Darstellern, zugeordnet.

Damit sich die Bedienperson mit dem mobilen Endgerät an dem Intercom-Netzwerk anmelden kann, um an dem Austausch von Audio-Informationen teilnehmen zu können, bedarf es bei dem Intercom-Netzwerk des Standes der Technik der Eingabe eines Passwortes oder einer PIN. Hierzu wird das mobile Endgerät in den Sende-/Empfangsbereiches eines stationären Teilnehmers des Intercom-Netzwerkes gebracht, und sodann wird über die Funkverbindung, über die auch die Audio-Kommunikation erfolgt, also insbesondere über eine Funkverbindung innerhalb des DECT-Frequenzbereiches, eine Kommunikationsverbindung zwischen dem mobilen Endgerät und dem stationären Endgerät durchgeführt. Im Rahmen dieses Kommunikationsaustausches wird das von der Bedienperson an dem mobilen Endgerät manuell eingegebene Passwort, also die Kennung, an das stationäre Element übermittelt. Die Einrichtung zur Teilnehmerverwaltung kann nun eine Autorisationsprüfung durchführen. Stimmt das Passwort mit dem in einem Speicher dieser Einrichtung abgelegten Passwort überein, wird das mobile Endgerät zur Kommunikation zugelassen, ansonsten abgelehnt.

Wie bei Live-Veranstaltungen üblich, können kurz vor der Veranstaltung eine Reihe unerwarteter Probleme auftreten. Die Eingabe der Passwörter erfordert dabei eine große besondere Aufmerksamkeit,
wobei die bei diesen Live-Veranstaltungen handelnden Personen ihr Augenmerk und ihre Konzentration häufig auch noch auf zahlreiche weitere Punkte richten müssen.

Ein weiteres Intercom-Netzwerk ähnlicher Art geht aus der DE 10 2014 104811 A1 der Anmelderin hervor. Hier ist nicht beschrieben, dass auch mobile Endgeräte vorgesehen sind. Weiterhin zeigt diese Druckschrift keine Übermittlung von Audiosignalen von dem mobilen Endgerät an das stationäre Element im DECT-Frequenzbereich. Schließlich ist aus der Druckschrift nicht bekannt, dass eine Einrichtung zur Teilnehmerverwaltung dazu eingerichtet ist, bei der Anmeldung des mobilen Endgerätes an dem stationären Element eine Autorisationsprüfung durchzuführen. Auch ist hier nicht beschrieben, dass die Einrichtung ein NFC-Element und das mobile Endgerät ein NFC-Gegenelement umfasst, wobei bei Annäherung des mobilen Endgerätes an das stationäre Element Autorisationsinformationen von dem NFC-Gegenelement an das NFC-Element übermittelbar sind.

Aus der EP 2 492 875 A2 geht ein Verfahren und eine Vorrichtung hervor, die ein Zugangskontrollsystem für einen physikalischen Zugang als auch für einen logischen Zugang insbesondere zu einem Gebäude betrifft. Ein Intercom-Netzwerk geht aus der Druckschrift nicht hervor.

Schließlich ist aus der US 2012/220224 A1 ein drahtloses Kommunikationssystem bekannt, mit dem ebenfalls eine Zugangskontrolle zu einem Eingang eines Gebäudes unter Zuhilfenahme eines ersten NFC-Gerätes und eines zweiten NFC-Gerätes und eines dritten NFC-Gerätes gewährleistet wird. Ein Intercom-Netzwerk geht aus der Druckschrift nicht hervor.

Aus der WO 2014/083436 A2 geht ein Intercom System unter Verwendung eines NFC Communication Device hervor. Beschrieben ist
hier anhand des Beispiels einer Türsprechanlage, dass unter Verwendung von NFC-Tags Audioverbindungen zu bestimmten Bewohnern eines Gebäudes aufgenommen werden können, wenn der Besucher dazu autorisiert ist. Als NFC Geräte werden bei einem anderen Ausführungsbeispiel dieser Druckschrift Mobiltelefone erwähnt. Das in der Druckschrift beschriebene Intercom Netzwerk dient allerdings nicht zur Verwendung im Rahmen von Live Veranstaltungen. Die Druckschrift offenbart keine Übermittlung von Audiosignalen von dem mobilen Endgerät an ein stationäres Element innerhalb des DECT-Frequenzbereiches. Im übrigen offenbart die Druckschrift kein mobiles Endgerät, das als Beltpack oder als mobiles Mikrophon ausgebildet ist.

Ausgehend von dem Intercom-Netzwerk der eingangs beschriebenen Art besteht die Aufgabe der Erfindung darin, das Netzwerk derartig weiterzubilden, dass dessen Bedienung sicherer und komfortabler wird.

Die Erfindung löst diese Aufgabe mit den Merkmalen des Anspruches 1, insbesondere mit denen des Kennzeichenteils, und ist demgemäß dadurch gekennzeichnet, dass die Einrichtung ein an dem stationären Element angeordnetes NFC-Element umfasst, und dass an dem mobilen Endgerät ein NFC-Gegenelement angeordnet ist, wobei bei Annäherung des mobilen Endgerätes an das stationäre Element Autorisationsinformationen von dem NFC-Gegenelement an das NFC-Element übermittelbar sind.

Das Prinzip der Erfindung besteht somit im wesentlichen darin, anstelle der bei einem Intercom-Netzwerk des Standes der Technik erforderlichen manuellen Eingabe eines Passwortes zur Durchführung der Autorisationsprüfung nunmehr eine NFC-Kommunikation vorzusehen. Hierzu ist an dem stationären Element ein NFC-Element angeordnet, und an dem mobilen Endgerät ein NFC-Gegenelement. Die NFC-Technologie
(NFC = Near Field Communication) unterliegt bekannten Industriestandards.

Bei Annäherung des mobilen Endgerätes an das stationäre Element sind gemäß der Erfindung Autorisationsinformationen von dem NFC-Gegenelement an das NFC-Element übermittelbar.

Die Annäherung kann kurze Distanzen von beispielsweise 0 bis 10 cm zwischen den beiden Geräten erfordern.

Ein Anmeldevorgang wird bei einem Ausführungsbeispiel der Erfindung immer dann initiiert, wenn ein mobiles Endgerät - zumindest kurzzeitig - in die Nähe des stationären Elementes verbracht wird.

Von dem NFC-Gegenelement können automatisch Autorisationsinformationen, die beispielsweise Informationen über eine Gerätekennung des mobilen Endgerätes, oder über eine Identifikationsnummer oder eine Kennung des mobilen Endgerätes enthalten, an das NFC-Element übermittelt werden. Als Autorisationsinformationen im Sinne der Erfindung werden jegliche Informationen oder Daten angesehen, die es der Einrichtung zur Teilnehmerverwaltung ermöglichen, eine Prüfung durchzuführen, ob das jeweilige mobile Endgerät an der Kommunikation mit den Teilnehmern dieses Intercom-Netzwerkes teilnehmen darf. Die Einrichtung zur Teilnehmerverwaltung kann im Zuge einer Autorisationsprüfung feststellen, ob die übermittelten Autorisationsinformationen denjenigen Informationen entsprechen, die zuvor in einem Speicher der Einrichtung abgelegt worden sind.

Eine manuelle Eingabe eines Passwortes oder eines PIN oder dergleichen an dem mobilen Endgerät ist insoweit nicht mehr erforderlich. Eine Übermittlung der Autorisationsinformationen kann automatisch erfolgen.

Die Bedienperson wird insoweit von der Eingabe eines Passwortes entlastet. Die Bedienperson braucht sich insbesondere kein Passwort mehr zu merken. Damit ist für die Bedienperson wertvolle Zeit und Konzentration gewonnen; die Bedienung des Intercom-Netzwerkes ist sicherer und komfortabler geworden.

Eine Konfiguration des Intercom-Netzwerkes wird derart durchgeführt, dass im Zuge der Zusammenstellung der an der Veranstaltung teilnehmenden Teilnehmer des Intercom-Netzwerkes alle Geräte von der Einrichtung der Teilnehmerverwaltung erfasst werden, die später während der Veranstaltung verwendet werden. Dabei kann insbesondere vorgesehen sein, dass jeder Teilnehmer eine eindeutige Kennung oder Identifikationsnummer oder ID oder dergleichen aufweist und ihm zugeordnet wird.

Im Zuge der Übertragung von Autorisationsinformationen von dem NFC-Gegenelement an das NFC-Element kann bei einem Anmeldevorgang vor Ort, also während bzw. kurz vor der Veranstaltung, diese Kennung oder Geräteinformation an die Einrichtung übermittelt werden. Eine Übermittlung dieser Zugangsdaten kann kodiert oder ggf. auch unkodiert erfolgen.

Das erfindungsgemäße Intercom-Netzwerk dient zur Echtzeit-Audio-Kommunikation zwischen Teilnehmern. Die Teilnehmer können stationäre Endgeräte oder mobile Endgeräte umfassen. Als stationäres Endgerät wird beispielsweise eine Sprechstelle oder ein Headset oder ein Beltpack oder ein Mikrophon verstanden, die jeweils unter Zuhilfenahme einer festen, kabelgebundenen Verbindung mit einem stationären Element, z. B. einer Vermittlungsstelle oder einer Basis oder einer Antenne, verbunden ist.

Das Intercom-Netzwerk gemäß der Erfindung umfasst wenigstens ein stationäres oder mobiles Element. Es kann sich dabei beispielsweise um eine Basis, also eine Art Vermittlungsstelle, handeln. Das Intercom-Netzwerk kann aber auch mehrere stationäre oder mobile Elemente aufweisen, z. B. eine Basis und mehrere daran angeschlossene sogenannte Antennen, die z. B. nach Art von Repeatern oder nach Art parallel oder seriell geschalteter Vermittlungsstellen fungieren können.

An das stationäre Element sind alle Teilnehmer unmittelbar, oder mittelbar über andere stationäre Elemente, angeschlossen.

Das Intercom-Netzwerk kann wenigstens ein mobiles Endgerät, vorzugsweise eine Vielzahl mobiler Endgeräte, umfassen. Mit dem jeweiligen mobilen Endgerät können Audio-Signale drahtlos an das stationäre Element, oder alternativ auch an einen anderen stationären Teilnehmer, oder auch an einen anderen mobilen Teilnehmer, übermittelt werden. Eine Übermittlung der Signale erfolgt drahtlos, insbesondere innerhalb des DECT-Frequenzbereiches, der gemäß internationalen Standards vorgegeben ist.

Das mobile Endgerät kann - wie der Name bereit andeutet - relativ zu dem stationären Element bewegt und verlagert werden. Dabei ist von der Erfindung auch umfasst, wenn mobile Endgeräte zu unterschiedlichen Zeitpunkten, in der Regel abhängig von unterschiedlichen relativen Positionen zu den stationären Elementen des Intercom-Netzwerkes, Audio-Signale an unterschiedliche stationäre Teilnehmer des Intercom-Netzwerks übermitteln.

Das stationäre Element weist eine Einrichtung zur Teilnehmerverwaltung auf, die die an das stationäre Element angeschlossenen Teilnehmer registriert und verwaltet. Eine solche Administration oder Verwaltung der angeschlossenen Teilnehmer erfordert beispielsweise, dass die Einrichtung - jederzeit - weiß, welcher Teilnehmer über welche Kabelverbindung oder welche Drahtlosverbindung an sie angeschlossen ist, wie die Kommunikationswege verlaufen, wie diese schaltbar sind etc. Die Einrichtung zur Teilnehmerverwaltung kann zentral oder dezentral aufgebaut sein. An dem stationären Element kann die gesamte Intelligenz der Einrichtung zur Teilnehmerverwaltung zentral angeordnet sein, oder nur ein Teil dieser Intelligenz, letzteres insbesondere, wenn die Einrichtung zur Teilnehmerverwaltung dezentral aufgebaut ist.

Zur Anmeldung des mobilen Endgerätes an dem stationären Element wird von der Einrichtung eine Autorisationsprüfung durchgeführt. Von der Erfindung sind Intercom-Netzwerke umfasst, bei denen das jeweilige mobile Endgerät zwingend immer nur an einem bestimmten stationären Element angemeldet werden kann, selbst, wenn mehrere stationäre Elemente im Netzwerk vorgesehen sind. Von der Erfindung ist aber auch umfasst, wenn das Intercom-Netzwerk mehrere stationäre Elemente aufweist, und das mobile Endgerät an einem beliebigen der mehreren stationären Elemente angemeldet werden kann.

Gemäß der Erfindung weist die Einrichtung ein an dem stationären Element angeordnetes NFC-Element auf. Im Falle mehrerer stationärer Elemente kann von der Erfindung umfasst sein, dass an jedem stationären Element ein NFC-Element angeordnet ist, oder alternativ nur an einem stationären Element ein NFC-Element angeordnet ist.

An dem mobilen Endgerät ist gemäß der Erfindung ein NFC-Gegenelement angeordnet. Die Bezeichnungen NFC-Element und NFC-Gegenelement sind beliebig gewählt. Man unterscheidet üblicherweise als kommerziell erhältliche Bauelemente ein NFC-Lesegerät und ein NFC-Tag. Es gibt auch herkömmliche NFC-Komponenten, die beide Teile, also sowohl das Lesegerät, als auch den Tag, umfassen. Gemäß einer Variante ist an der Einrichtung zur Teilnehmerverwaltung ein NFC-Lesegerät und an dem jeweiligen mobilen Endgerät ein NFC-Tag angeordnet. Auch die umgekehrte Ausgestaltung ist von der Erfindung aber umfasst.

Autorisationsinformationen sind von dem NFC-Gegenelement an das NFC-Element übermittelbar, wenn die beiden Geräte aneinander angenähert sind. Eine solche Autorisationsinformationsübermittlung kann jedes Mal, das heißt automatisch, erfolgen, wenn das mobile Endgerät an das stationäre Element angenähert ist. Es ist von der Erfindung aber auch umfasst, wenn zur Initiierung der Übermittlung von Autorisationsinformationen von dem NFC-Gegenelement an das NFC-Element durch die Bedienperson eine Betätigung einer Taste oder eines Schalters oder eines sonstigen Betätigungselementes an dem mobilen Endgerät und/oder an dem stationären Element durchgeführt werden muss.

Als NFC wird ein herkömmlicher, international festgelegter Funkstandard verstanden. Die Verwendung von NFC-Komponenten ermöglicht einen Rückgriff auf herkömmliche, kommerziell erhältliche Bausteine.

Gemäß einer vorteilhaften Ausgestaltung der Erfindung umfassen die Autorisationsinformationen eine eindeutige Kennung des mobilen Endgerätes oder eine Information über das mobile Endgerät. Es kann sich dabei beispielsweise um eine eindeutige Kennung handeln, die die Einrichtung zur Teilnehmerverwaltung an dem stationären Element erkennen kann, um das mobile Endgerät eindeutig als dem Intercom-Netzwerk zugehörig identifizieren zu können. Es kann sich aber insbesondere auch um eine eindeutige Gerätekennung handeln, die für jedes mobile Endgerät nur einmal vergeben wird, beispielsweise eine Art Seriennummer.

Die Autorisationsinformationen können die Kennung kodiert oder unkodiert, mittelbar oder unmittelbar umfassen. Wichtig ist, dass sich das richtige mobile Endgerät an dem stationären Element anmeldet bzw. andere, nicht für eine Anmeldung an dem Intercom-Netzwerk autorisierte Geräte von der Einrichtung auch als nicht-autorisiert erkannt werden können, und von einer Anmeldung ausgeschlossen werden können.

Gemäß einer weiteren vorteilhaften Ausgestaltung der Erfindung lässt die Einrichtung zur Teilnehmerverwaltung im Zuge der Durchführung der Autorisationsprüfung eine Anmeldung des mobilen Endgerätes an dem stationären Element nur zu, wenn die eindeutige Kennung als eine autorisierte Kennung in einem Speicher der Einrichtung hinterlegt ist. Im Zuge des Konfigurationsvorganges des Intercom-Netzwerkes werden die zugelassenen mobilen Endgeräte bzw. Informationen darüber in einem Speicher kodiert oder unkodiert hinterlegt. Die Einrichtung zur Teilnehmerverwaltung führt eine Autorisationsprüfung durch, wenn sich ein mobiles Endgerät an einem stationären Element oder an einem mobilen Element anmeldet, und lässt nur diejenigen mobilen Endgeräte zu, deren eindeutige Kennung als zugelassen im Speicher enthalten ist. Die Einrichtung zur Teilnehmerverwaltung führt insoweit einen entsprechenden Vergleich durch.

Das einmal in dem Intercom-Netzwerk angemeldete mobile Endgerät bleibt dort vorteilhafterweise so lange angemeldet, bis ein Abmeldevorgang durchgeführt wird.

Gemäß einer weiteren vorteilhaften Ausgestaltung der Erfindung sind bei dem Intercom-Netzwerk gemäß der Erfindung mehrere mobile Endgeräte vorgesehen. Dabei kann insbesondere vorgesehen sein, dass jedes der mobilen Endgeräte jeweils ein NFC-Element aufweist. Jedes der mobilen Endgeräte kann darüber hinaus eine eigene Kennung aufweisen, die an das NFC-Gegenelement übermittelbar ist, oder jedenfalls über das NFC-Gegenelement an die Einrichtung zur Teilnehmerverwaltung versendbar ist. Die Erfindung macht sich bei derartigen Intercom-Netzwerken in besonderem Maße vorteilhaft bemerkbar, da so auch bei einer Vielzahl von Bedienpersonen mit jeweils eigenen mobilen Endgeräten die Anmeldungs- und Registrierungsvorgänge denkbar kurz und einfach gehalten sind, da sich jedes mobile Endgerät durch eine kurze Annäherung an ein stationäres Element an dem Netzwerk anmelden kann.

Gemäß einer weiteren vorteilhaften Ausgestaltung der Erfindung sind mehrere stationäre Elemente vorgesehen. Die Einrichtung zur Teilnehmerverwaltung kann mehrere NFC-Elemente umfassen, die auf die mehreren stationären Elemente aufgeteilt sind. Vorteilhafterweise kann jedes der mehreren stationären Elemente jeweils ein NFC-Element umfassen. Es ist bei dieser Ausgestaltung der Erfindung beliebig, an welchem der stationären Elemente das mobile Endgerät angemeldet wird.

Unabhängig davon, an welchem der stationären Elemente sich das mobile Endgerät angemeldet hat, kann die Einrichtung zur Teilnehmerverwaltung die Informationen über die vorgenommene Anmeldung erlangen. Die Einrichtung zur Teilnehmerverwaltung ist hier dezentral organisiert, und kann Autorisierungsprüfungen durchführen, unabhängig davon, an welchem stationären Endgerät sich ein mobiles Endgerät versucht, anzumelden.

Gemäß einer weiteren vorteilhaften Ausgestaltung der Erfindung sind bei relativer Annäherung eines ersten mobilen Endgerätes an ein zweites autorisiertes mobiles Endgerät Autorisationsinformationen von dem NFC-Gegenelement des zweiten mobilen Endgerätes an das NFC-Gegenelement des ersten mobilen Endgerätes übermittelbar. Von dem NFC-Gegenelement des ersten mobilen Endgerätes werden diese Informationen drahtlos an die Teilnehmerverwaltung übermittelt.

Bei dieser Ausgestaltung der Erfindung kann beispielsweise ein Beltpack als mobiles Endgerät nicht nur selbst eine Anmeldung an einem stationären Element vornehmen, sondern an diesem obigen Endgerät kann auch ein zweiter Beltpack, also ein zweites mobiles Endgerät, eine Anmeldung durchführen. So können sich ggf. auch mehrere mobile

Endgeräte sukzessive an einem ersten mobilen Endgerät anmelden, und dieses kann die Autorisationsinformationen der Teilnehmerverwaltung übermitteln. Hierdurch wird der Anmeldungs- und Registrierungsprozess im Falle der Verwendung mehrerer mobiler Endgeräte weiter erheblich sicherer und vereinfacht.

Die Einrichtung zur Verwaltung der Teilnehmer schaltet entsprechende Audio-Kanäle zur Kommunikation zwischen den Teilnehmern für die jeweiligen mobilen Endgeräte erst dann frei, wenn ein Autorisationsprozess zu einem positiven Ergebnis geführt hat.

Gemäß einer weiteren vorteilhaften Ausgestaltung der Erfindung ist an dem mobilen Endgerät ein Betätigungselement angeordnet, infolge dessen Betätigung eine Abmeldung des mobilen Endgerätes an dem Intercom-Netzwerk bewerkstelligbar ist. Hier kann beispielsweise eine einfache Taste oder ein Knopf vorgesehen sein, der bei Betätigung die Abmeldung des mobilen Endgerätes aus dem Intercom-Netzwerk vornimmt.

Ein solcher Abmeldevorgang kann von der Einrichtung zur Verwaltung der Teilnehmer vorteilhaft protokolliert und/oder festgestellt werden, so dass sichergestellt ist, dass nicht versehentlich Kommunikationen zu dem abgemeldeten mobilen Endgerät durchgeführt werden.

Zur Vermeidung von Wiederholungen wird bezüglich der verwendeten Begriffe und Merkmale und deren Auslegung auf die obigen Ausführungen verwiesen.

Die Erfindung betrifft gemäß einem weiteren Aspekt ein Verfahren zur Anmeldung eines mobilen Endgerätes an einem stationären Element eines Intercom-Netzwerkes nach Anspruch 9.

Der Erfindung liegt die Aufgabe zugrunde, ein solches Verfahren, wie es bei einem gattungsgemäßen Intercom-Netzwerk bekannt und beschrieben worden ist, derartig weiterzubilden, dass dieses vereinfachter, komfortabler und sicherer ist.

Die Erfindung löst diese Aufgabe mit den Merkmalen des Anspruches 9.

Wiederum wird zu Vermeidung von Wiederholungen auf die obigen Ausführungen, auch bezüglich der Auslegung der Merkmale und der verwendeten Begrifflichkeiten, verwiesen.

Zur Klarstellung sei angemerkt, dass die Verfahrensschritte a) bis d) des Anspruches 9 zeitlich vor Beginn der durchzuführenden Live-Veranstaltung oder des Events durchgeführt werden, insbesondere, aber nicht ausschließlich, an einem anderen Ort, als dem Veranstaltungsort.

Hingegen wird der Schritt e) des Anmeldens des mobilen Endgerätes unmittelbar kurz vor Beginn der Veranstaltung oder während der Veranstaltung, insbesondere am Veranstaltungsort, durchgeführt.

Die Erfindung betrifft des Weiteren ein Intercom-Netzwerk nach dem Oberbegriff des Anspruches 10.

Das Prinzip der Erfindung liegt wiederum darin, ein bekanntes Intercom-Netzwerk des Standes der Technik, wie eingangs beschrieben, derartig weiterzubilden, dass das Netzwerk sicherer und komfortabler wird.

Die Erfindung löst diese Aufgabe mit den Merkmalen des Anspruches 10, insbesondere mit denen des Kennzeichenteils, und demgemäß dadurch gekennzeichnet, dass die Einrichtung ein an dem stationären Element angeordnetes RFID-Element umfasst, und dass an dem mobilen Endgerät ein RFID-Gegenelement angeordnet ist, wobei bei Annäherung des mobilen Endgerätes an das stationäre Element Autorisationsinformationen von dem RFID-Gegenelement an das RFID-Element übermittelbar sind.

Bezüglich der Bedeutung und Auslegung der Merkmale des Anspruches 10 und der Schilderung der Vorteile der Lehre nach Anspruch 10 und ihre Funktionsweise, kann zur Vermeidung von Wiederholungen auf die obigen Ausführungen zu Anspruch 1 und auch zu den nach Anspruch 1 abhängigen Ansprüchen verwiesen werden. Ausweislich der Lehre des Anspruches 10 kann an Stelle eines NFC-Elementes und an Stelle eines NFC-Gegenelementes ein RFID-Element und ein RFID-Gegenelement verwendet werden.

Von der Erfindung sind darüber hinaus jegliche Kombinationen des Gegenstandes des Anspruches 10 mit Merkmalen der vorliegenden Patentanmeldung umfasst, die nur oder auch in Bezug zu der NFC-Technologie beschrieben sind. Diese Merkmale können im Rahmen der Erfindung auch in Bezug zu RFID-Elementen und RFID-Gegenelementen Anwendung finden, und solche Anwendungen sind von der Erfindung mit umfasst.

Gemäß einem weiteren Aspekt bezieht sich die Erfindung auf ein Verfahren nach Anspruch 11.

Der Erfindung liegt die Aufgabe zugrunde, das eingangs beschriebene Verfahren derartig weiterzubilden, dass dieses vereinfacht, komfortabler und sicherer ist.

Die Erfindung löst diese Aufgabe mit den Merkmalen des Anspruches 11.

Wiederum wird zur Vermeidung von Wiederholungen auf die obigen Ausführungen, auch bezüglich der Auslegung der Merkmale, verwiesen, wobei die zu NFC-Element und NFC-Gegenelement gemachten Ausführungen in analoger Weise auch auf das RFID-Element und das RFID-Gegenelement Anwendung finden.

Weitere Vorteile der Erfindung ergeben sich aus den nicht zitierten Unteransprüchen, sowie anhand der nachfolgenden Beschreibung der in den Figuren dargestellten Ausführungsbeispiele.

Darin zeigen:
- Fig. 1: in einer schematischen, blockschaltbildartigen Ansicht ein Ausführungsbeispiel eines erfindungsgemäßen Intercom-Netzwerkes mit zwei stationären Elementen, sechs daran angeschlossenen stationären Teilnehmern, und zwei mobilen Endgeräten, ebenfalls in schematischer, blockschaltbildartiger Darstellung,
- Fig. 2: in einer schematischen, perspektivischen Ansicht ein als Beltpack ausgebildetes mobiles Endgerät, etwa wie in Teilkreis II in Fig. 1 gezeigt, mit einem daran über Kabel angeschlossenen Headset, und
- Fig. 3: in einer schematischen Darstellung eine Bedienperson, die ein solches Beltpack und ein Headset, wie in Fig. 2 gezeigt, trägt.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

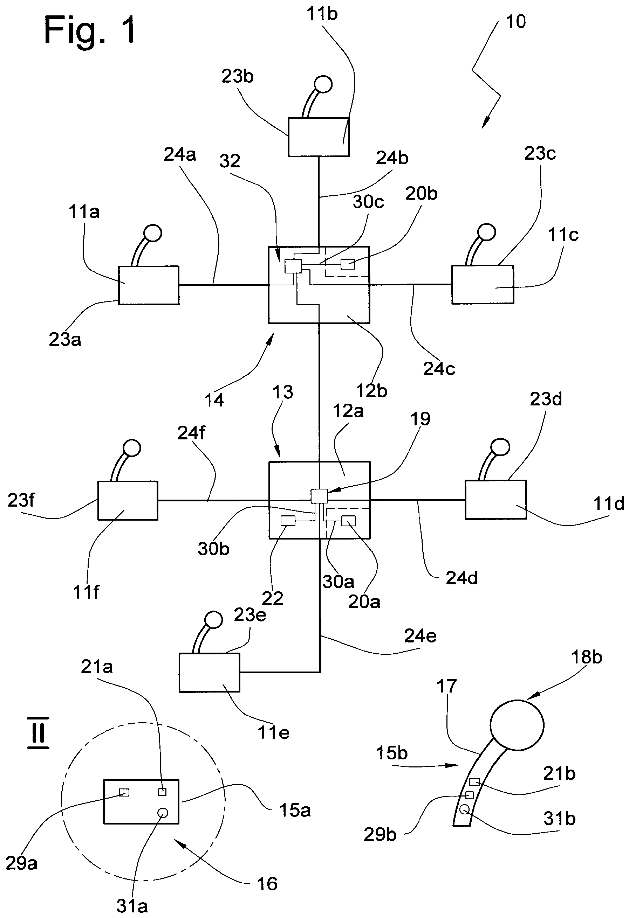

Ein Ausführungsbeispiel der Erfindung ist in Fig. 1 schematisch dargestellt, und als Intercom-Netzwerk insgesamt mit 10 bezeichnet.

Das Intercom-Netzwerk 10 der Fig. 1 umfasst eine Vielzahl von Teilnehmern, die mit den Bezugszeichen 11a, 11b, 11c, 11d, 11e, 11f bezeichnet sind. Das Intercom-Netzwerk 10 umfasst darüber hinaus ein stationäres Element 12a, das als Basis ausgebildet ist, und ein weiteres stationäres Element 12b, das als sogenannte Antenne ausgebildet ist.

Jeder der Teilnehmer 11a, 11b, 11c, 11d, 11e, 11f ist als Sprechstelle 23a, 23b, 23c, 23d, 23e, 23f ausgebildet. Eine Sprechstelle ist ein herkömmliches elektronisches Gerät, welches insbesondere ein Mikrophon, einen Lautsprecher und Direktwahltasten aufweist. Zur Vermeidung von Wiederholungen kann bezüglich des Begriffes Sprechstelle auf die deutschen Patentanmeldungen DE 10 2014 011 963 A1 und DE 10 2014 104 811 A1 der Anmelderin verwiesen werden.

Jede der Sprechstellen 23a, 23b, 23c, 23d, 23e, 23f bildet insoweit einen stationären Teilnehmer 11a, 11b, 11c, 11d, 11e, 11f aus, der jeweils über eine elektrische Verbindungsleitung 24a, 24b, 24c, 24d, 24e, 24f mit wenigstens einem der beiden stationären Elemente 12a, 12b verbunden ist. Aufgrund der kabelgebundenen Verbindung zwischen Teilnehmer 11a, 11b, 11c, 11d, 11e, 11f und dem stationären Element 12a, 12b ist der entsprechende Teilnehmer 11a, 11b, 11c, 11d, 11e, 11f ein stationärer, das heißt nicht mobiler Teilnehmer.

In Fig. 1 nicht dargestellt, aber von der Erfindung umfasst, sind auch Intercom-Netzwerke, bei denen sogenannte Beltpacks oder Mikrophone über ein Kabel an ein stationäres Element 12a, 12b angebunden sind. Man spricht dann ebenfalls von stationären Teilnehmern.

Bei dem Intercom-Netzwerk 10 gemäß dem Ausführungsbeispiel der Fig. 1 ist eine Basis 13 vorgesehen. Diese weist eine Einrichtung 19 zur Verwaltung der angeschlossenen Teilnehmer 11a, 11b, 11c, 11d, 11e, 11f auf. Die Einrichtung 19 zur Verwaltung der Teilnehmer kann von einem Mikroprozessor gebildet sein, oder einen solchen umfassen.

Bei dem Ausführungsbeispiel der Fig. 1 ist zusätzlich zu der sogenannten Basis 13 noch eine Antenne 14 vorgesehen.

Von der Erfindung sind auch Ausführungsbeispiele von Netzwerken 10 umfasst, bei denen keine Antenne 14 vorgesehen ist, und auch Ausführungsbeispiele, bei denen mehrere Antennen vorgesehen sind. Je mehr Antennen 14 vorgesehen sind, oder je mehr Basiselemente 13 vorgesehen sind, umso ausgeprägter kann die Intelligenz der Steuereinheit, also die Intelligenz der Einrichtung 19 zur Teilnehmerverwaltung, dezentral, über mehrere stationäre Elemente 13, 14 verteilt angeordnet sein.

Die Einrichtung 19 zur Teilnehmerverwaltung administriert und verwaltet die Schaltungswege zwischen den einzelnen Teilnehmern 11a, 11b, 11c, 11d, 11e, 11f.

Als weitere Teilnehmer des Intercom-Netzwerkes 10 sind ausweislich des Ausführungsbeispiels der Fig. 1 ein mobiles Endgerät 15a in Form eines Beltpack 16, und ein weiteres mobiles Endgerät 15b in Form eines mobilen Mikrophons 17 vorgesehen.

Das mobile Mikrophon 17 weist einen Audio-Input 18b auf, in den hinein Sprechsignale unmittelbar von einer Bedienperson 33 eingegeben werden können.

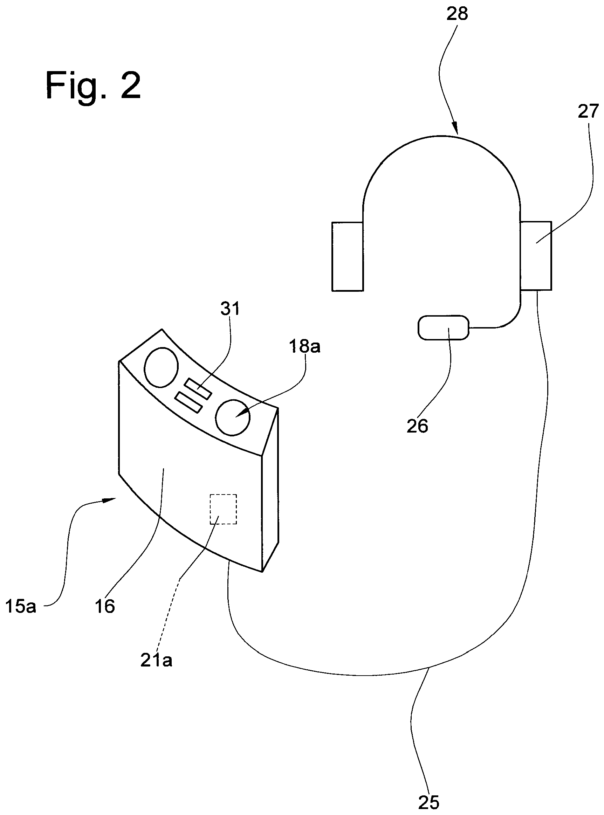

Der Beltpack 16 weist hingegen einen Audio-Input 18a auf, der als Audio-Anschluss ausgebildet ist, beispielsweise als Buchse oder als Stecker, zur Aufnahme eines in Fig. 2 nicht dargestellten Kabels 25, zur Verbindung mit einem Mikrophon oder mit einem Headset 28 gemäß Fig. 2.

Ausweislich des Ausführungsbeispiels der Fig. 1 sind bei dem Ausführungsbeispiel eines Intercom-Netzwerkes 10 ein Beltpack 16 und ein mobiles Mikrophon 17 vorgesehen. Von der Erfindung sind aber auch Ausführungsbeispiele umfasst, bei denen mehrere Beltpacks 16 und/oder mehrere mobile Mikrophone 17 vorgesehen sind. Auch sind von der Erfindung Intercom-Netzwerke umfasst, bei denen keine stationären Teilnehmer 11a, 11b, 11c, 11d, 11e, 11f, sondern lediglich mobile Endgeräte 15a, 15b, vorgesehen sind.

Während über die stationären Teilnehmer 11a, 11b, 11c, 11d, 11e, 11f Audio-Signale über die kabelgebundenen Verbindungsleitungswege 24a, 24b, 24c, 24d, 24e, 24f, 24g übermittelt werden, können von und zu den mobilen Endgeräten 15, 15b entsprechende Audio-Signale drahtlos übermittelt werden. Hierzu wird insbesondere auf den DECT-Funkstandard zurückgegriffen.

Jedes der mobilen Endgeräte 15a, 15b weist insoweit ein Kommunikationsmodul auf, mit dem Audio-Signale empfangen und gesendet werden können. Gleichermaßen weisen die Basis 13 und/oder die Antenne 14 und/oder die stationären Teilnehmer 23a, 23b, 23c, 23d, 23e, 23f entsprechende Kommunikationsmodule auf, mit denen die Audio-Signale insbesondere nach dem Funkstandard DECT übermittelt, das hießt, empfangen und gesendet werden können.

Die jeweiligen Kommunikationsmodule für die Audio-Signalübertragung in den mobilen Endgeräten 15a, 15b und in der Basis 13 bzw. der Antenne 14 sind in den Figuren der Übersichtlichkeit halber nicht dargestellt. Es handelt sich hierbei um herkömmliche, kommerziell erhältliche Bausteine, die auch bereits bei Intercom-Netzwerken des Standes der Technik und in den entsprechenden mobilen Endgeräten Anwendung finden.

Das Intercom-Netzwerk 10 gemäß der Erfindung wird in der Regel, wenn auch nicht ausschließlich, bei Live-Veranstaltungen, bei Events, im Theaterbereich etc. eingesetzt. Um einen reibungslosen Ablauf der Veranstaltung zu garantieren, wird das Intercom-Netzwerk 10 zuvor, beispielsweise im Werk, konfiguriert. Hierzu wird das Intercom-Netzwerk 10 hinsichtlich der erforderlichen Geräte oder Teilnehmer zusammengestellt. Soweit die Auswahl der mobilen Endgeräte 15a, 15b, betroffen ist, ist darauf hinzuweisen, dass jedes der mobilen Endgeräte einen elektronischen Baustein 29a, 29b aufweisen kann, in dem eine Kennung, insbesondere eine Gerätekennung, oder eine Geräteidentifikationsnummer oder dergleichen, vermerkt ist. Es kann sich bei der Kennung beispielsweise um eine Seriennummer des Gerätes handeln, oder jedenfalls um einen Code, der eine Identifizierung des Gerätes durch die Einrichtung 19 zur Teilnehmerverwaltung ermöglicht.

Zur Klarstellung sei angemerkt, dass die Bausteine 29a, 29b auch mit dem jeweiligen, später noch zu erläuternden NFC-Gegenelement 21a, 21b verschmolzen sein können, bzw. ein Bestandteil des letzteren sein können.

Diejenigen mobilen Endgeräte 15a, 15b, die während der Veranstaltung an das Intercom-Netzwerk 10 gemäß Fig. 1 angeschlossen werden sollen, werden zuvor, also beispielsweise ab Werk, bei der Konfiguration berücksichtigt. Hierzu wird der Einrichtung 19 zur Teilnehmerverwaltung im Rahmen des Konfigurationsprozesses des Intercom-Netzwerkes 10 mitgeteilt, insbesondere mittels einer Konfigurationssoftware, dass ein bestimmtes mobiles Endgerät 15a, z. B. das Beltpack 16 der Fig. 1, mit einer bestimmten Kennung während der Veranstaltung zur Anmeldung zugelassen werden soll. Der Einrichtung 19 zur Teilnehmerverwaltung ist ein Speicher 22 zugeordnet, in dem diese Kennung gespeichert wird.

Angemerkt sei, dass eine Konfiguration des Intercom-Netzwerkes 10 beispielsweise geraume Zeit vor der Veranstaltung, beispielsweise sogar einige Wochen oder Monate vor der Veranstaltung, getroffen werden kann, da häufig viel Zeit benötigt wird, um die einzelnen Geräte des Intercom-Netzwerkes 10 zu dem Veranstaltungsort zu transportieren.

Wenn das Intercom-Netzwerk 10 der Fig. 1 nun vor Ort, also am Veranstaltungsort, zwecks Durchführung der Veranstaltung, aufgebaut wird, und in Betrieb gesetzt wird, müssen sich die in dem Intercom-Netzwerk 10 einzusetzenden mobilen Endgeräte 15a, 15b an dem System anmelden, bzw. registrieren. Hierdurch kann einerseits verhindert werden, dass unautorisierte Geräte Zugriff erlangen. Zum anderen kann sichergestellt werden, dass die richtigen Geräte, also beispielsweise die mobilen Endgeräte 15a, 15b, die auch die erforderlichen technischen Eigenschaften mitbringen, an das Intercom-Netzwerk 10 angeschlossen werden.

Außerdem kann hierdurch sichergestellt werden, dass für den Fall, dass während der Veranstaltung zwei oder mehr Intercom-Systeme verwendet werden, sich das richtige mobile Endgerät 15a, 15b an dem richtigen Intercom-System 10 anmeldet, und nicht versehentlich an dem falschen Intercom-System 10.

Um diesen Registrierungsprozess möglichst sicher und komfortabel zu gestalten, ist an die Einrichtung 19 zur Teilnehmerverwaltung der Basis 13 über eine Steuerleitung 30a ein NFC-Element 20a angeschlossen. Das NFC-Element 20a kann beispielsweise von einem herkömmlichen NFC-Lesegerät gebildet sein, wie es kommerziell erhältlich ist.

Das mobile Endgerät 15a in Form des Beltpack 16 in Fig. 1 weist ein NFC-Gegenelement 21a auf. Werden das NFC-Element 20a und das NFC-Gegenelement 21a nahe aneinander heran gebracht, beispielsweise auf einen Abstand von weniger als 10cm zueinander, kann die z. B. in dem Speicher 29a oder in dem NFC-Gegenelement 21a hinterlegte Kennung von dem NFC-Gegenelement 21a an das NFC-Element 20a übermittelt werden, und von dort weiter an die Einrichtung 19 zur Teilnehmerverwaltung übermittelt werden. Diese prüft die erhaltenen Daten, vergleicht diese mit den in dem Speicher 22 abgelegten Daten, und kann sodann durch Vergleich entscheiden, ob das Beltpack 16 bzw. das mobile Endgerät 15a der Fig. 1 für einen Anschluss an das stationäre Element 12a zugelassen ist, oder nicht. Nur für den Fall, dass eine positive Autorisierungsprüfung erfolgt, darf das mobile Endgerät 15a an der Kommunikation mit den anderen Teilnehmern 23a, 23b, 23c, 23d, 23e, 23f des Intercom-Netzwerkes 10 teilnehmen.

Angemerkt sei, dass der Speicher 22 ausweislich Fig. 1 über eine Steuerleitung 30b mit der Einrichtung 19 verbunden ist. Der Speicher 22 kann selbstverständlich auch Bestandteil der Einrichtung 19 sein.

Auch kann das NFC-Element 30a Bestandteil der Einrichtung 19 sein.

Gleichermaßen kann der Speicher 29a des mobilen Endgerätes 15a Bestandteil des NFC-Gegenelementes sein. Hier können geeignete elektronische Baueinheiten und Bauelemente und Verschaltungen verwendet werden.

Völlig selbstredend ist angemerkt, dass das mobile Endgerät 15a, 15b über eine Spannungsversorgung, beispielsweise über eine Batterie oder einen Akku oder dergleichen verfügt, um, soweit erforderlich, die elektronischen elektrischen Elemente und Bauteile des mobilen Endgerätes 15a, 15b mit der erforderlichen Betriebsspannung zu versorgen.

Gleichermaßen ist das stationäre Element 12a, 12b ebenfalls mit einer nicht dargestellten Spannungsversorgung, Leitung oder Netzleitung ausgestattet, um für einen Betrieb der elektronischen und elektrischen Bauelemente des stationären Elementes 12a zu sorgen.

Die Antenne 14 weist einen vergleichbaren Aufbau auf: Hier ist ein Bauelement 32 vorgesehen, welches als Teil der Einrichtung 19 des stationären Elementes 12a angesehen werden kann. Das Bauelement 32 ist über eine Steuerleitung 30c mit einem weiteren NFC-Element 20b verbunden. Bei diesem Ausführungsbeispiel kann das mobile Endgerät 15a sich beispielsweise an dem stationären Element 12a oder alternativ auch an dem stationären Element 12b anmelden.

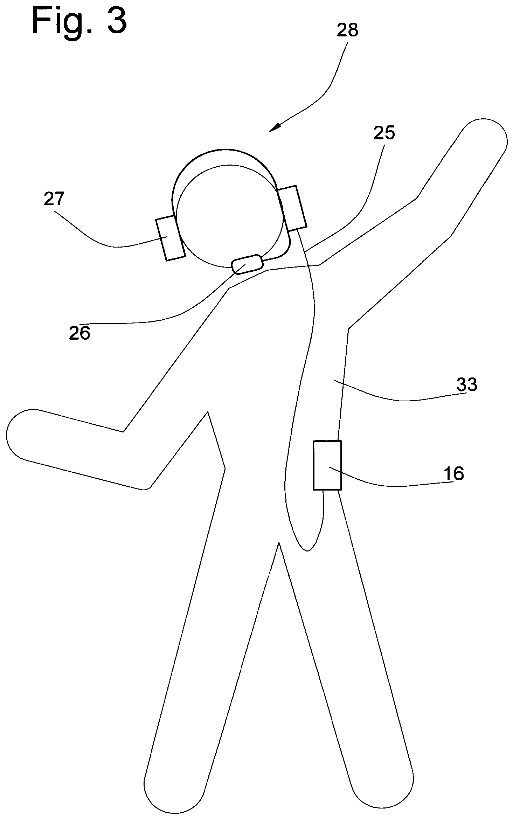

Ausweislich des Ausführungsbeispiels der Fig. 2 soll darauf hingewiesen werden, dass ein Beltpack 16 über ein Kabel 25 mit einem Headset 28 verbunden werden kann, und - wie Fig. 3 zeigt - am Körper einer Person getragen werden kann. Das Headset 28 kann ein Mikrophon 26 und einen Kopfhörer 27 aufweisen Auch andere Ausgestaltungen, als die in Fig. 2 und 3 dargestellten, sind selbstverständlich von der Erfindung umfasst. Die Person 33 gemäß Fig. 3 ist lediglich beispielhaft zu verstehen, und kann beispielsweise einen Moderator einer Fernsehsendung illustrieren.

An dem mobilen Endgerät 15a, 16 ist ein Betätigungselement 31a in Form einer Taste, eines Schalters oder eines Knopfes angebracht. Durch Betätigung des Betätigungselementes 31a kann eine Abmeldung dieses mobilen Endgerätes 15a von dem Intercom-Netzwerk 10 erfolgen. Beispielsweise wird durch Betätigung des Betätigungselementes 31a über das NFC-Gegenelement 21a und das NFC-Element 20a der Einrichtung 19 mitgeteilt, dass sich dieses mobile Endgerät 15a von dem Intercom-Netzwerk 10 abmeldet.

Ein zweites mobiles Endgerät ist in Form des mobilen Mikrophons 17 in Fig. 1 dargestellt:
Auch hier ist ein elektronischer Baustein 29a angedeutet, in dem eine Kennung dieses Mikrophons 17 gespeichert sein kann. Das NFC-Gegenelement 21b funktioniert gleichermaßen wie das zuvor beschriebene NFC-Gegenelement 21a.

Auch das mobile Mikrophon 17 gemäß Fig. 1 weist ein Betätigungselement 31b auf, mit dem eine Abmeldung des mobilen Mikrophons von dem Intercom-Netzwerk 10 durchgeführt werden kann.

## Patentansprüche

1. Intercom-Netzwerk (10) zur Echtzeit-Audiokommunikation zwischen Teilnehmern (11a, 11b, 11c, 11d, 11e, 11f, 15a, 15b)), umfassend wenigstens ein stationäres Element (12a, 12b), wie Basis (13), an das die Teilnehmer (11a, 11b, 11c, 11d, 11e, 11f) angeschlossen sind, und wenigstens ein mobiles Endgerät (15a, 15b), wie Beltpack (16) oder mobiles Mikrophon (17), welches einen Audio-Input (18a, 18b) aufweist, wobei mit dem mobilen Endgerät Audio-Signale drahtlos innerhalb des DECT-Frequenzbereiches an das stationäre Element oder an einen anderen stationären Teilnehmer übermittelbar sind, wobei das stationäre Element eine Einrichtung (19) zur Teilnehmerverwaltung aufweist, die die an das stationäre Element (12a, 12b) angeschlossenen Teilnehmer (11a, 11b, 11c, 11d, 11e, 11f, 15a, 15b) administriert, und wobei zur Anmeldung des mobilen Endgerätes an dem stationären Element von der Einrichtung eine Autorisationsprüfung durchgeführt wird, wobei die Einrichtung (19) ein an dem stationären Element (12a) angeordnetes NFC-Element (20a) umfasst, und wobei an dem mobilen Endgerät (15a, 15b) ein NFC-Gegenelement (21a, 21b) angeordnet ist, wobei bei Annäherung des mobilen Endgerätes an das stationäre Element Autorisationsinformationen von dem NFC-Gegenelement an das NFC-Element übermittelbar sind.

2. Intercom-Netzwerk nach Anspruch 1, **dadurch gekennzeichnet, dass** die Autorisationsinformationen eine eindeutige Kennung des mobilen Endgerätes (15a) umfassen.

3. Intercom-Netzwerk nach Anspruch 2, **dadurch gekennzeichnet, dass** die Einrichtung (19) im Zuge der Durchführung der Autorisationsprüfung eine Anmeldung des mobilen Endgerätes (15a, 15b) an dem stationären Element (12a, 12b) nur zulässt, wenn die eindeutige Kennung als eine autorisierte Kennung in einem Speicher (22) der Einrichtung hinterlegt ist.

4. Intercom-Netzwerk nach einem der vorangegangenen Ansprüche, **dadurch gekennzeichnet, dass** mehrere mobile Endgeräte (15a, 15b) vorgesehen sind.

5. Intercom-Netzwerk nach Anspruch 4, **dadurch gekennzeichnet, dass** die mehreren mobilen Endgeräte (15a, 15b) jeweils ein NFC-Gegenelement (21a, 21b) mit eigener Kennung aufweisen.

6. Intercom-Netzwerk nach einem der vorangegangenen Ansprüche, **dadurch gekennzeichnet, dass** mehrere stationäre Elemente (12a, 12b) vorgesehen sind, und dass die Einrichtung (19) mehrere NFC-Elemente (20a, 20b) umfasst, die auf die mehreren stationären Elemente aufgeteilt sind.

7. Intercom-Netzwerk nach Anspruch 4, **dadurch gekennzeichnet, dass** bei relativer Annäherung eines ersten mobilen Endgerätes an ein zweites mobiles Endgerät Autorisationsinformationen von dem NFC-Gegenelement des zweiten mobilen Endgerätes an das NFC-Gegenelement des ersten mobilen Endgerätes und von dort weiter an das NFC-Element des stationären Elementes übermittelbar sind.

8. Intercom-Netzwerk nach einem der vorangegangenen Ansprüche, **dadurch gekennzeichnet, dass** an dem mobilen Endgerät (15a, 15b) ein Betätigungselement (31a, 31b) angeordnet ist, mit dessen Betätigung eine Abmeldung des mobilen Endgerätes von dem Intercom-Netzwerk (10) bewerkstelligbar ist.

9. Verfahren zur Anmeldung eines mobilen Endgerätes (15a, 15b) an einem stationären Element (12a, 12b) eines Intercom-Netzwerkes (10), dessen Teilnehmer (11a, 11b, 11c, 11d, 11e, 11f, 15a, 15b) zur Durchführung von Echtzeit-Audiokommunikation Audio-Signale drahtlos innerhalb des DECT-Frequenzbereiches übertragen können, umfassend die folgenden Schritte:
a) Bereitstellen wenigstens eines stationären Elementes (12a, 12b), das mit einem NFC-Element (20a, 20b) ausgestattet ist,
b) Bereitstellen einer Einrichtung (19) zur Teilnehmerverwaltung, mit der die an das stationäre Element (12a, 12b) angeschlossenen Teilnehmer (11a, 11b, 11c, 11d, 11e, 11f, 15a, 15b) administrierbar sind,
c) Bereitstellen wenigstens eines mobilen Endgerätes (15a, 15b), an dem ein NFC-Gegenelement (21a, 21b) angeordnet ist,
d) Konfigurieren des Intercom-Netzwerkes (10), wobei in einem Speicher (22) der Einrichtung (19) eine eindeutige Kennung des mobilen Endgerätes (15a, 15b) gespeichert wird,
e) Anmelden des mobilen Endgerätes (15a, 15b) an dem stationären Element (12a, 12b) durch Annäherung des mobilen Endgerätes an das stationäre Element, wobei infolge der Annäherung Autorisationsinformationen von dem NFC-Gegenelement (21a, 21b) des mobilen Endgerätes (15a, 15b) an das NFC-Element (20a, 20b) an dem stationären Element (12a, 12b) übermittelt werden.

10. Intercom-Netzwerk (10) zur Echtzeit-Audiokommunikation zwischen Teilnehmern (11a, 11b, 11c, 11d, 11e, 11f, 15a, 15b)), umfassend wenigstens ein stationäres Element (12a, 12b), wie Basis (13), an das die Teilnehmer (11a, 11b, 11c, 11d, 11e, 11f) angeschlossen sind, und wenigstens ein mobiles Endgerät (15a, 15b), wie Beltpack (16) oder mobiles Mikrophon (17), welches einen Audio-Input (18a, 18b) aufweist, wobei mit dem mobilen Endgerät Audio-Signale drahtlosinnerhalb des DECT-Frequenzbereiches, an das stationäre Element oder an einen anderen stationären Teilnehmer übermittelbar sind, wobei das stationäre Element eine Einrichtung (19) zur Teilnehmerverwaltung aufweist, die die an das stationäre Element (12a, 12b) angeschlossenen Teilnehmer (11a, 11b, 11c, 11d, 11e, 11f, 15a, 15b) administriert, und wobei zur Anmeldung des mobilen Endgerätes an dem stationären Element von der Einrichtung eine Autorisationsprüfung durchgeführt wird, wobei die Einrichtung (19) ein an dem stationären Element (12a) angeordnetes RFID-Element (20a) umfasst, und wobei an dem mobilen Endgerät (15a, 15b) ein RFID-Gegenelement (21a, 21b) angeordnet ist, wobei bei Annäherung des mobilen Endgerätes an das stationäre Element Autorisationsinformationen von dem RFID-Gegenelement an das RFID-Element übermittelbar sind.

11. Verfahren zur Anmeldung eines mobilen Endgerätes (15a, 15b) an einem stationären Element (12a, 12b) eines Intercom-Netzwerkes (10), dessen Teilnehmer (11a, 11b, 11c, 11d, 11e, 11f, 15a, 15b) zur Durchführung von Echtzeit-Audiokommunikation Audio-Signale drahtlos innerhalb des DECT-Frequenzbereiches, übertragen können, umfassend die folgenden Schritte:
a) Bereitstellen wenigstens eines stationären Elementes (12a, 12b), das mit einem RFID-Element (20a, 20b) ausgestattet ist,
b) Bereitstellen einer Einrichtung (19) zur Teilnehmerverwaltung, mit der die an das stationäre Element (12a, 12b) angeschlossenen Teilnehmer (11a, 11b, 11c, 11d, 11e, 11f, 15a, 15b) administrierbar sind,
c) Bereitstellen wenigstens eines mobilen Endgerätes (15a, 15b), an dem ein RFID-Gegenelement (21a, 21b) angeordnet ist,
d) Konfigurieren des Intercom-Netzwerkes (10), wobei in einem Speicher (22) der Einrichtung (19) eine eindeutige Kennung des mobilen Endgerätes (15a, 15b) gespeichert wird,
e) Anmelden des mobilen Endgerätes (15a, 15b) an dem stationären Element (12a, 12b) durch Annäherung des mobilen Endgerätes an das stationäre Element, wobei infolge der Annäherung Autorisationsinformationen von dem RFID-Gegenelement (21a, 21b) des mobilen Endgerätes (15a, 15b) an das RFID-Element (20a, 20b) an dem stationären Element (12a, 12b) übermittelt werden.

## Claims

1. Intercom network (10) for real-time audio communication between participants (11a, 11b, 11c, 11d, 11e, 11f, 15a, 15b), comprising at least one stationary element (12a, 12b), such as a base (13), to which the participants (11a, 11b, 11c, 11d, 11e, 11f) are connected, and at least one mobile terminal (15a, 15b), such as a belt pack (16) or mobile microphone (17), which has an audio input (18a, 18b), wherein, with the mobile terminal, audio signals can be transmitted wirelessly within the DECT frequency range to the stationary element or to another stationary participant, wherein the stationary element has a device (19) for participant management, which administers the participants (11a, 11b, 11c, 11d, 11e, 11f, 15a, 15b) connected to the stationary element (12a, 12b), and wherein an authorisation check is carried out by the device to register the mobile terminal on the stationary element, wherein the device (19) comprises an NFC element (20a) arranged on the stationary element (12a), and wherein an NFC counter element (21a, 21b) is arranged on the mobile terminal (15a, 15b), wherein authorisation information can be transmitted from the NFC counter element to the NFC element when the mobile terminal approaches the stationary element.

2. Intercom network according to claim 1, **characterised in that** the authorisation information comprises a unique identifier of the mobile terminal (15a).

3. Intercom network according to claim 2, **characterised in that** the device (19) only enables registration of the mobile terminal (15a, 15b) on the stationary element (12a, 12b) as a result of carrying out the authorisation check when the unique identifier is stored as an authorised identifier in a memory (22) of the device.

4. Intercom network according to one of the preceding claims, **characterised in that** several mobile terminals (15a, 15b) are provided.

5. Intercom network according to claim 4, **characterised in that** the several mobile terminals (15a, 15b) each have an NFC counter element (21a, 21b) with its own identifier.

6. Intercom network according to one of the preceding claims, **characterised in that** several stationary elements (12a, 12b) are provided, and the device (19) comprises several NFC elements (20a, 20b), which are apportioned to the several stationary elements.

7. Intercom network according to claim 4, **characterised in that** authorisation information can be transmitted from the NFC counter element of the second mobile terminal to the NFC counter element of the first mobile terminal and from there further to the NFC element of the stationary element when a first mobile terminal approaches a second mobile terminal.

8. Intercom network according to one of the preceding claims, **characterised in that** an actuation element (31a, 31b) is arranged on the mobile terminal (15a, 15b), with the actuation of which deregistration of the mobile terminal from the intercom network (10) can be achieved.

9. Method for registering a mobile terminal (15a, 15b) on a stationary element (12a, 12b) of an intercom network (10), the participants of which (11a, 11b, 11c, 11d, 11e, 11f, 15a, 15b) can transfer audio signals wirelessly within the DECT frequency range to carry out real-time audio communication, comprising the following steps:
a) providing at least one stationary element (12a, 12b) which is equipped with an NFC element (20a, 20b),
b) providing a device (19) for participant management, with which the participants (11a, 11b, 11c, 11d, 11e, 11f, 15a, 15b) connected to the stationary element (12a, 12b) can be administered,
c) providing at least one mobile terminal (15a, 15b), on which an NFC counter element (21a, 21b) is arranged,
d) configuring the intercom network (10), wherein a unique identifier of the mobile terminal (15a, 15b) is stored in a memory (22) of the device (19),
e) registering the mobile terminal (15a, 15b) on the stationary element (12a, 12b) due to the mobile terminal approaching the stationary element, wherein, following the approach, authorisation information is transmitted from the NFC counter element (21a, 21b) of the mobile terminal (15a, 15b) to the NFC element (20a, 20b) on the stationary element (12a, 12b).

10. Intercom network (10) for real-time audio communication between participants (11a, 11b, 11c, 11d, 11e, 11f, 15a, 15b), comprising at least one stationary element (12a, 12b), such as a base (13), to which the participants (11a, 11b, 11c, 11d, 11e, 11f) are connected, and at least one mobile terminal (15a, 15b), such as a belt pack (16) or a mobile microphone (17), which has an audio input (18a, 18b), wherein, with the mobile terminal, audio signals can be transmitted wirelessly within the DECT frequency range to the stationary element or to another stationary participant, wherein the stationary element has a device (19) for participant management, which administers the participants (11a, 11b, 11c, 11d, 11e, 11f, 15a, 15b) connected to the stationary element (12a, 12b), and wherein an authorisation check is carried out by the device to register the mobile terminal on the stationary element, wherein the device (19) comprises an RFID element (20a) arranged on the stationary element (12a), and wherein an RFID counter element (21a, 21b) is arranged on the mobile terminal (15a, 15b), wherein authorisation information can be transmitted from the RFID counter element to the RFID element when the mobile terminal approaches the stationary element.

11. Method for registering a mobile terminal (15a, 15b) on a stationary element (12a, 12b) of an intercom network (10), the participants of which (11a, 11b, 11c, 11d, 11e, 11f, 15a, 15b) can transfer audio signals wirelessly within the DECT frequency range to carry out real-time audio communication, comprising the following steps:
a) providing at least one stationary element (12a, 12b) which is equipped with an RFID element (20a, 20b),
b) providing a device (19) for participant management, with which the participants (11a, 11b, 11c, 11d, 11e, 11f, 15a, 15b) connected to the stationary element (12a, 12b) can be administered,
c) providing at least one mobile terminal (15a, 15b), on which an RFID counter element (21a, 21b) is arranged,
d) configuring the intercom network (10), wherein a unique identifier of the mobile terminal (15a, 15b) is stored in a memory (22) of the device (19),
e) registering the mobile terminal (15a, 15b) on the stationary element (12a, 12b) due to the mobile terminal approaching the stationary element, wherein, following the approach, authorisation information is transmitted from the RFID counter element (21a, 21b) of the mobile terminal (15a, 15b) to the RFID element (20a, 20b) on the stationary element (12a, 12b).

## Revendications

1. Réseau interphonique (10) pour la communication audio en temps réel entre des participants (11a, 11b, 11c, 11d, 11e, 11f, 15a, 15b)), comprenant au moins un élément stationnaire (12a, 12b), tel qu'une base (13), auquel les participants (11a, 11b, 11c, 11d, 11e, 11f) sont connectés, et au moins un dispositif mobile (15a, 15b), tel qu'un Beltpack (16) ou un microphone mobile (17), qui comporte une entrée audio (18a, 18b), le dispositif mobile permettant de transmettre sans fil des signaux audio dans la bande de fréquences DECT à l'élément stationnaire ou à un autre participant stationnaire, l'élément stationnaire comportant un dispositif (19) de gestion des participants qui administre les participants connectés à l'élément stationnaire (12a, 12b) (11a, 11b, 11c, 11d, 11e, 11f, 15a, 15b) et un contrôle d'autorisation est effectué par le dispositif pour l'enregistrement du dispositif mobile sur l'élément stationnaire, le dispositif (19) comprenant un élément NFC (20a) disposé sur l'élément stationnaire (12a) et un contre-élément NFC (21a, 21b) étant disposé sur le dispositif mobile (15a, 15b), des informations d'autorisation pouvant être transmises du contre-élément NFC à l'élément NFC lorsque le dispositif mobile s'approche de l'élément stationnaire.

2. Réseau interphonique selon la revendication 1, **caractérisé en ce que** les informations d'autorisation comprennent un identifiant unique du dispositif mobile (15a).

3. Réseau interphonique selon la revendication 2, **caractérisé en ce que**, lors de la réalisation du contrôle d'autorisation, le dispositif (19) n'autorise un enregistrement du dispositif mobile (15a, 15b) sur l'élément stationnaire (12a, 12b) que si l'identifiant unique est enregistré en tant qu'identifiant autorisé dans une mémoire (22) du dispositif.

4. Réseau interphonique selon l'une des revendications précédentes, **caractérisé en ce que** plusieurs terminaux mobiles (15a, 15b) sont prévus.

5. Réseau interphonique selon la revendication 4, **caractérisé en ce que** les plusieurs terminaux mobiles (15a, 15b) comportent chacun un contre-élément NFC (21a, 21b) avec son propre identifiant.

6. Réseau interphonique selon l'une des revendications précédentes, **caractérisé en ce que** plusieurs éléments stationnaires (12a, 12b) sont prévus et **en ce que** le dispositif (19) comprend plusieurs éléments NFC (20a, 20b) qui sont répartis sur les plusieurs éléments stationnaires.

7. Réseau interphonique selon la revendication 4, **caractérisé en ce que**, lors du rapprochement relatif d'un premier dispositif mobile près d'un deuxième dispositif mobile, des informations d'autorisation du contre-élément NFC du deuxième dispositif mobile peuvent être transmises au contre-élément NFC du premier dispositif mobile, puis de là à l'élément NFC de l'élément stationnaire.

8. Réseau interphonique selon l'une des revendications précédentes, **caractérisé en ce qu'**un élément d'actionnement (31a, 31b) est disposé sur le dispositif mobile (15a, 15b), dont l'actionnement permet de déconnecter le dispositif mobile du réseau interphonique (10).

9. Procédé d'enregistrement d'un dispositif mobile (15a, 15b) sur un élément fixe (12a, 12b) d'un réseau interphonique (10) dont les participants (11a, 11b, 11c, 11d, 11e, 11f, 15a, 15b) peuvent transmettre des signaux audio sans fil dans la bande de fréquences DECT pour effectuer une communication audio en temps réel, comprenant les étapes suivantes :
a) fournir au moins un élément stationnaire (12a, 12b) équipé d'un élément NFC (20a, 20b) ;
b) fournir un dispositif (19) pour la gestion des participants, avec lequel les participants (11a, 11b, 11c, 11d, 11e, 11f, 15a, 15b) connectés à l'élément stationnaire (12a, 12b) peuvent être administrés,
c) fournir au moins un dispositif mobile (15a, 15b) sur lequel est disposé un contre-élément NFC (21a, 21b),
d) configurer le réseau interphonique (10), un identifiant unique du dispositif mobile (15a, 15b) étant enregistré dans une mémoire (22) du dispositif (19),
e) enregistrer le dispositif mobile (15a, 15b) sur l'élément stationnaire (12a, 12b) par rapprochement du dispositif mobile près de l'élément stationnaire, des informations d'autorisation provenant du contre-élément NFC (21a, 21b) du dispositif mobile (15a, 15b) étant transmises à l'élément NFC (20a, 20b) sur l'élément stationnaire (12a, 12b) à la suite du rapprochement.

10. Réseau interphonique (10) pour la communication audio en temps réel entre des participants (11a, 11b, 11c, 11d, 11e, 11f, 15a, 15b)), comprenant au moins un élément stationnaire (12a, 12b), tel qu'une base (13), auquel les participants (11a, 11b, 11c, 11d, 11e, 11f) sont raccordés, et au moins un dispositif mobile (15a, 15b), tel qu'un Beltpack (16) ou un microphone mobile (17), qui comporte une entrée audio (18a, 18b), les signaux audio pouvant être transmis sans fil dans la gamme de fréquences DECT avec le dispositif mobile à l'élément stationnaire ou à un autre participant stationnaire, l'élément stationnaire comportant un dispositif (19) pour la gestion des participants, qui administre les participants connectés (11a, 11b, 11c, 11d, 11e, 11f, 15a, 15b) à l'élément stationnaire (12a, 12b), un contrôle d'autorisation étant effectué par le dispositif pour l'enregistrement du dispositif mobile sur l'élément stationnaire, le dispositif (19) comprenant un élément RFID (20a) disposé sur l'élément fixe (12a), et un contre-élément RFID (21a, 21b) étant disposé sur le dispositif mobile (15a, 15b), des informations d'autorisation pouvant être transmises par le contre-élément RFID à l'élément RFID lorsque le dispositif mobile s'approche de l'élément stationnaire.

11. Procédé d'enregistrement d'un dispositif mobile (15a, 15b) sur un élément stationnaire (12a, 12b) d'un réseau interphonique (10) dont les participants (11a, 11b, 11c, 11d, 11e, 11f, 15a, 15b) peuvent transmettre sans fil des signaux audio dans la gamme de fréquences DECT afin d'établir une communication audio en temps réel, comprenant les étapes suivantes :
a) fournir au moins un élément fixe (12a, 12b) équipé d'un élément RFID (20a, 20b),
b) mettre à disposition un dispositif (19) pour la gestion des participants, avec lequel les participants (11a, 11b, 11c, 11d, 11e, 11f, 15a, 15b) connectés à l'élément stationnaire (12a, 12b) peuvent être administrés,
c) fournir au moins un dispositif mobile (15a, 15b) sur lequel est disposé un contre-élément RFID (21a, 21b),
d) configurer le réseau interphonique (10), un identifiant unique du dispositif mobile (15a, 15b) étant enregistré dans une mémoire (22) du dispositif (19),
e) enregistrer le dispositif mobile (15a, 15b) sur l'élément fixe (12a, 12b) par rapprochement du dispositif mobile de l'élément fixe, des informations d'autorisation provenant du contre-élément RFID (21a, 21b) du dispositif mobile (15a, 15b) étant transmises à l'élément RFID (20a, 20b) sur l'élément stationnaire (12a, 12b) à la suite de ce rapprochement.
